# EUROPÄISCHE PATENTSCHRIFT

(11) **EP 1 527 921 B1**
(45) Veröffentlichungstag und Bekanntmachung des Hinweises auf die Patenterteilung: **29.12.2010**
(21) Anmeldenummer: 04023635.8
(22) Anmeldetag: 05.10.2004
(51) Int. Cl.: B60J 1/20, B60R 13/02

(54) **Seitenverkleidung mit integrierter Führungsschiene für ein Fensterrollo**
Side panel with integrated guide rail for a roller blind
Panneau latéral avec un rail de guidage intégré, pour un store à enrouleur

(30) Priorität: 31.10.2003 DE 10351040
(43) Veröffentlichungstag der Anmeldung: 04.05.2005
(73) Patentinhaber: BOS GmbH & Co. KG, 73760 Ostfildern (DE)
(72) Erfinder: Weinbrenner, Harry, 73760 Ostfildern (DE); Bühl, Olaf, 73095 Albershausen (DE)
(74) Vertreter: Rüger, Barthelt & Abel Patentanwälte

(56) Entgegenhaltungen:
- EP-A- 1 129 871
- DE-A1- 3 822 378
- DE-U1- 9 010 440
- DE-U1- 9 303 987
- US-A1- 2002 059 989

## Beschreibung

Die DE 100 57 759 A1 zeigt ein Heckscheibenrollo für Kraftfahrzeuge. Zu dem Heckscheibenrollo gehört eine unterhalb der Hutablage drehbar gelagerte Wickelwelle, an der mit einer Kante die Rollobahn befestigt ist. Die Rollobahn ist etwa trapezförmig zugeschnitten und mit ihrer anderen, von der Wickelwelle abliegenden Kante an einem Zugstab befestigt. Der Zugstab wird seitlich in zwei Führungsschienen geführt, die an der Innenseite der Heckscheibe aufgeklebt bzw. hinter der C-Säulenverkleidung in der Karosserie verborgen sind. In den Führungsschienen laufen biegeelastische Schubglieder, die ausknicksicher in den Führungsschienen geführt sind.

Die Führungsschienen bestehen aus einem Aluminiumstrangpressprofil, das eine durchgehende hinterschnittene Nut enthält. Die Nut setzt sich zusammen aus einer im Querschnitt kreisförmigen Kammer und einem Nutenschlitz, der schmäler ist als der Durchmesser der Kammer.

In den Führungsschienen laufen Gleit- oder Führungskörper, die einen Kopf aufweisen, der im Querschnitt an den Querschnitt der Kammer des Führungsschienenprofils angepasst ist. Dieser Kopf hat entweder die Gestalt einer Kugel oder eines kurzen zylindrischen Stückes, das so bemessen ist, dass es in den gekrümmten Abschnitten der Führungsschienen nicht klemmt. Der Durchmesser des Halses erlaubt ein klemmfreies laufen im Nutenschlitz.

Der Kopf des Führungsteils des Auszugprofils besteht üblicherweise aus einem gespritzten Kunststoff.

Es hat sich im Laufe der Zeit herausgestellt, dass die Paarung aus dem Kunststoff und der Aluminiumschiene nicht unter allen Bedingungen klapperfrei ist.

Die Reibpaarung aus den Kunststoffführungskörpern und der Aluminiumschiene ist ebenfalls nicht optimal.

Schließlich bestehen gewisse Schwierigkeiten, die Führungsschienen im Fahrzeug zu montieren, denn sie sind von dem Innenverkleidungsteilen unabhängige Bauteile.

Ferner ist aus der DE 93 03 987 U1 ein Innenverkleidungsteil für einen Wohnwagen bekannt, wobei in dem Innenverkleidungsteil eine Verankerungsschiene enthalten ist. Bei der bekannten Anordnung ist das Innenverkleidungsteil ein durchgehendes Element, das in dem Bereich der später die Verankerungsschiene aufnimmt, mit einer hinterschnittenen Nut versehen ist. In die Nut wird ein Verankerungsschienenprofil eingelegt.

Ausgehend hiervon ist es Aufgabe der Erfindung ein neues Heckscheibenrollo zu schaffen, bei dem die Nachteile des Standes der Technik vermieden sind.

Diese Aufgabe wird erfindungsgemäß durch das Fensterrollo mit den Merkmalen des Anspruches 1 bzw. den Satz von Innenverkleidungsteilen mit den Merkmalen des Anspruches 12 gelöst.

Das Fensterrollo bspw. ein Heckscheibenrollo weist in der üblichen Weise eine Wickelwelle auf, auf der eine Rollobahn aufgewickelt ist. Um die Rollobahn in den aufgespannten Zustand zu führen und sie aufgespannt zu halten, ist an der Vorderkante der Rollobahn ein Spriegel vorgesehen. Der Spriegel läuft endseitig in Führungsschienen. Die Führungsschienen sind integraler Bestandteil der Seitenverkleidung bspw. der C-Säule der Karosserie.

Die C-Säule befindet sich zwischen der Heckscheibe und der letzten Seitenscheibe. Das Innenverkleidungsteil an jeder Fahrzeugseite ist in ein erstes und ein zweites Teil aufgeteilt, die unter Ausbildung eines Spaltes aneinander grenzen. An der Rückseite der beiden Verkleidungsteile sitzt im Bereich des Spaltes eine Schiene, die den Schlitz überdeckt. Auf diese Weise entsteht im montierten Zustand jeweils eine Führungsschienenanordnung für den Spriegel mit einer hinterschnittenen Nut. Die hinterschnittene Nut setzt sich aus einer von einer Wand begrenzten Kammer und einem von zwei Schlitzwänden begrenzten Schlitz zusammen, über den sich die Kammer nach außen öffnet, die im Durchmesser größer ist als die Schlitzbreite.

Da die Führungsnut ohnehin in unmittelbarer Nachbarschaft des betreffenden Fensters verläuft, ist dasjenige

Innenverkleidungsteil, das sich zwischen dem Spalt und der Fensterscheibe befindet, relativ sehr schmal. Es kann deswegen ohne Weiteres über die Schiene mit dem anderen größeren Innenverkleidungssteil verbunden sein. Eine andere Möglichkeit besteht darin, die beiden Innenverkleidungsteile unabhängig von der Schiene in geeigneter Weise miteinander zu verbinden bzw. einstückig herzustellen.

Ein wesentlicher Vorteil der mit der neuen Anordnung erreicht werden kann, besteht in dem Umstand, dass die Innenverkleidungsteile, die im Wesentlichen flächige Gebilde darstellen, gespritzt werden können, ohne dass Spritzgussformen bewegliche Kerne aufweisen müssen um die Kammer der Führungsnut zu erzeugen. Eine solche Herstellung wäre praktisch unmöglich, weil die Führungsnut weder gerade ist, noch eine konstante Krümmung aufweist. Sie folgt im Wesentlichen dem Karosserieverlauf und ändert somit längs ihrer Erstreckung kontinuierlich den Krümmungsradius. Es wäre unmöglich aus einer solchen Führungsnut den Kern herauszuziehen oder einen solchen Kern vor dem Spritzen in dem Formnest zu fixieren.

Kleinere bewegliche Kerne zum Erzeugen von Rastbolzen oder Rastöffnungen zur Befestigung der Innenverkleidungsteile an der Karosserie vergrößern die Komplexität der Spritzgussform nicht nennenswert. Sie verhindern deswegen auch nicht die Herstellung des betreffenden Innenverkleidungsteils.

Das Gleiche gilt für Hinterschneidungen, die zum Halten der Schiene an der Rückseite der Innenverkleidungsteile erforderlich sind.

Die Schiene bei dem neuen Fensterrollo wird als separates Teil gespritzt. Gemäß einem Ausführungsbeispiel enthält die Schiene für sich genommen bereits eine hinterschnittene Nut bestehend aus Kammer und Nutenschlitz. Hierbei ist es allerdings möglich, die Schiene so zu gestalten, dass sie trotz Hinterschneidung von einem starren Kern in einem Formnest abgezogen werden kann, der die Kammer der Nut erzeugt. Dies geschieht einfach, indem die gespritzte Schiene von dem Formkern so heruntergezogen wird, dass der Formkern für die Kammer durch den Schlitz der Nut hindurch gleitet, wobei sich der Schlitz entsprechend elastisch weitet und anschließend wieder auf sein richtiges Maß schließt. Diese Aufweitung wird auch nicht behindert, wenn die Führungsschiene eine Krümmung in Längsrichtung zeigt.

Auch in drei Dimensionen gekrümmten Schienen sind so zu erzeugen.

Das Abziehen der Schiene von dem Formkern lässt sich ohne weiteres aufgrund einer geeigneten Relation zwischen der Weite des Nutenschlitzes und dem Durchmesser der Kammer erreichen. Insbesondere wird das Abziehen erleichtert, wenn die Wand der Kammer jeweils unter einem Winkel größer als 90° in die betreffende Schlitzwand übergeht. Beim Abziehen entstehen automatische Kräfte, die bestrebt sind, die Schiene im Bereich des Schlitzes aufzuweiten, damit der Formkern durch den Schlitz hindurchtreten kann.

Bei der anderen Ausführungsform enthält die Schiene lediglich eine rinnenförmige Nut, die frei von Hinterschneidungen ist. Die Wand der Kammer ist bei dieser Ausführungsform zum Teil in der Schiene und zum Teil an der Rückseite der Innenverkleidungsteile ausgebildet. Die Schlitzwände befinden sich ausschließlich an den Innenverkleidungsteilen und sind streckenweise mit den Wänden des Spaltes identisch, der die beiden Innenverkleidungsteile voneinander trennt.

In jedem Falle sind an der Schiene und/oder den Innenverkleidungsteilen Befestigungsmittel vorgesehen, um die Schiene mit den Innenverkleidungsteilen dauerhaft zu verbinden.

Die Verbindung zwischen dem Innenverkleidungsteilen kann, wie erwähnt, entweder über die Schiene erfolgen oder durch davon getrennte Verbindungsmittel bspw. angespritzte Brücken und dergleichen.

Die erfindungsgemäßen Innenverkleidungsteile sind für eine Fensterrollo vorgesehen, dass in einem Fahrzeug zu integrieren ist. Hierzu sind die Innenverkleidungsteile in einer Weise gestaltet wie dies oben erläutert ist.

Im Übrigen sind Weiterbildungen Gegenstand von Unteransprüchen.

Nach dem Lesen der Beschreibung wird dem Fachmann klar, dass eine Reihe von Abwandlungen möglich sind.

In der Zeichnung sind Ausführungsbeispiele des Gegenstandes der Erfindung dargestellt. Es zeigen:
- Fig. 1: eine teilweise aufgebrochene Heckpartie eines Kraftfahrzeuges, in einer perspektivischen Dar- stellung mit Blick gegen die Innenseite der Heck- scheibe,
- Fig. 2: den prinzipiellen Aufbau des Heckscheibenrollos nach Fig. 1,
- Fig. 3: eine erste Ausführungsbeispiel der Innenverklei- dungsteile mit integrierter Führungsschienenan- ordnung, in einem Schnitt quer zur Längserstrec- kung der Führungsnut,
- Fig. 4: stark schematisiert das Entformen der Schiene aus der Spritzgussform, in einer Schnittdarstellung, und
- Fig. 5: ein zweites Ausführungsbeispiel der Innenverklei- dungsteile mit integrierter Führungsschienenan- ordnung, in einem Schnitt quer zur Längserstrec- kung der Führungsnut.

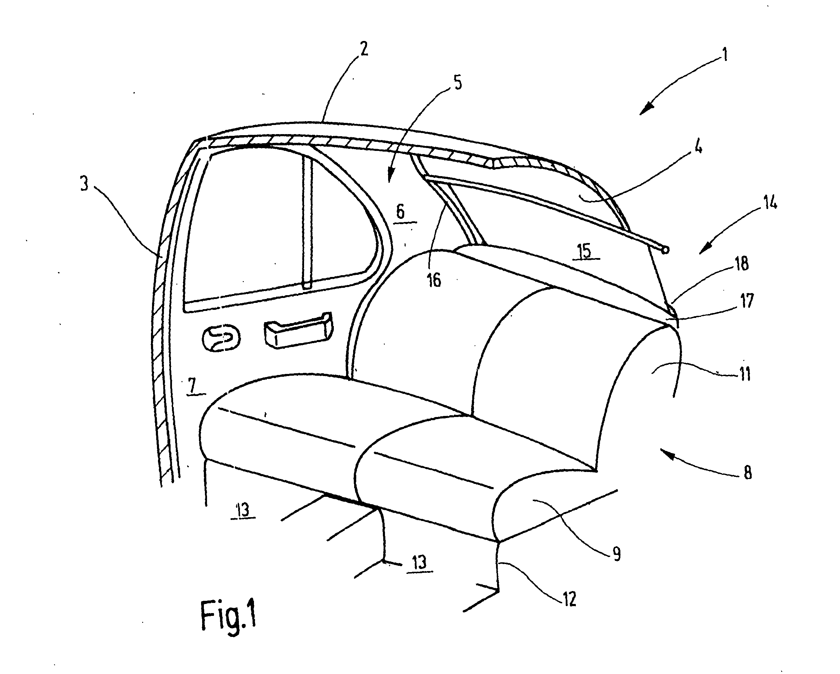

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet.

Die C-Säule 5 trägt eine Innenverkleidung 6.

Zwischen der B-Säule 3 und der C-Säule 5 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogene Rollobahn sowie eine der seitlichen hinterschnittenen Führungsnuten 16 zu erkennen. Die Führungsnut 16 beginnt an einer hinter der Rücksitzlehne 11 vorhandenen Hutablage 17 und verläuft neben der seitlichen Fensterkante. Außerdem enthält die Hutablage 17 einen durchgehendenden Auszugsschlitz 18, aus dem die Rollobahn 15 herausläuft.

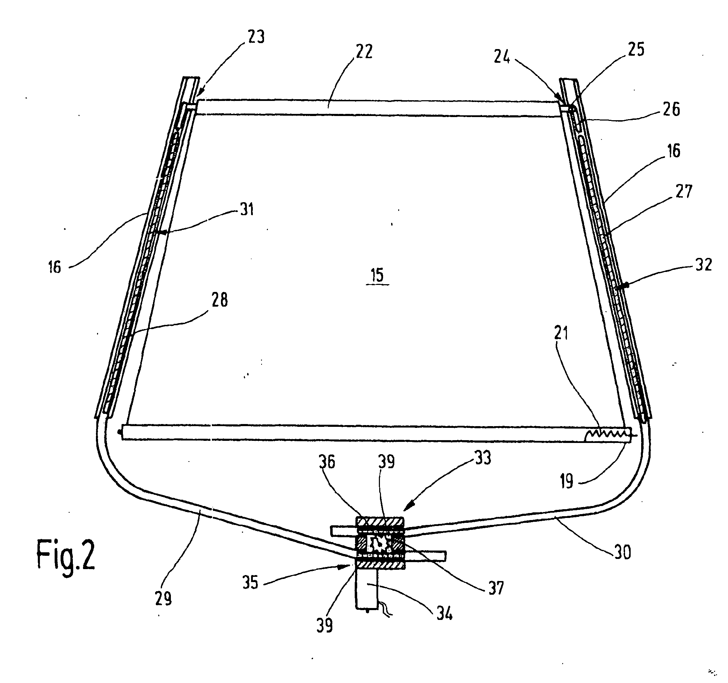

Der prinzipelle Aufbau des Heckscheibenrollos 14 ergibt sich aus Fig. 2.

Unterhalb der Hutablage 17 ist, wie sich aus Fig. 2 ergibt, eine Wickelwelle 19 drehbar gelagert, an der mit einer Kante die Rollobahn 15 befestigt ist. Die Wickelwelle 19 ist mit Hilfe eines schematisch angedeuteten Federmotors 21 im Sinne des Aufwickelns der Rollobahn 15 auf die Wickelwelle 19 vorgespannt. Hierzu ist eine Schraubenfeder vorgesehen, die einends karosseriefest verankert und andernends in der Wickelwelle 19 festgelegt ist.

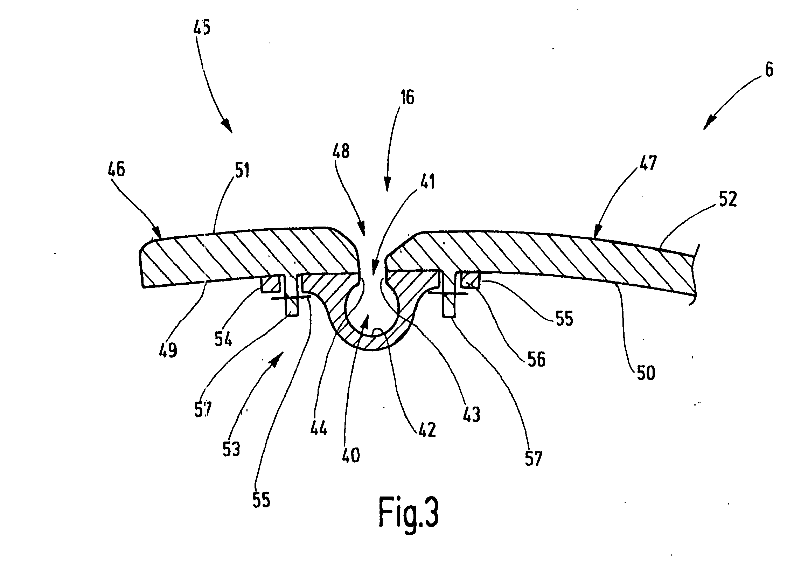

Die Rollobahn 15 weist einen etwa trapezförmigen Zuschnitt auf und ist an ihrer von der Wickelwelle 19 abliegenden Kante mit einer schlauchförmigen Schlaufe 22 versehen. Durch die schlauchförmige Schlaufe 22 führt ein Auszugsprofil oder Spriegel, in dem Führungsstücke 23 und 24 teleskopartig gelagert sind. Die Führungsstücke 23 und 24 weisen einen Halsteil 25 auf, der einen kleineren Durchmesser aufweist als ein sich daran anschließendes Führungsglied 26, das die Gestalt eines kurzen zylinderförmigen Abschnitts aufweist. Die Führungsstücke 26 laufen in den hinterschnittenen Führungsnuten 16, die neben den beiden Seitenkanten des Heckfensters 4 angeordnet sind. Der Aufbau der Führungsnuten 16 ist weiter unten anhand der Fig. 3 erläutert.

Das untere Ende jeder Führungsnut 16 ist mit einem Führungsrohr 29, 30 verbunden, in denen knicksteif zwei biegsame Schubglieder 31 und 32 geführt sind. Die biegsamen Schubglieder 31 und 32 sind sogenannte Suflexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 29 und 30 verbinden die Führungsnuten 16 mit einem Getriebemotor 33. Der Getriebemotor 33 setzt sich aus einem permanent erregten Gleichstrommotor 34 und einem Getriebe 35 zusammen auf dessen Ausgangswelle 36 ein Stirnzahnrad 37 drehfest sitzt. Das Zahnrad 37 kämmt mit den beiden Schubgliedern 31 und 32 formschlüssig. Diese Schubglieder 31 und 32 laufen tangential an die an diametral gegenüberliegenden Seiten an dem Stirnzahnrad 37 vorbei und sind hierzu in entsprechenden Bohrungen geführt.

Durch Ingangsetzen des Getriebemotors 33 werden die Schubglieder 31, 32 wahlweise in die Führungsnuten 16 vorgeschoben oder daraus zurückgezogen. Der Bewegung der Schubglieder 31, 32 folgen die Führungsstücke 23 und 24. Diese werden mit Hilfe des Federmotors 21 gegen die freien Enden der Schubglieder 31, 32 anliegend gehalten, die sich in den Führungsnuten 27 befinden.

Fig. 3 zeigt im Querschnitt den Aufbau der Innenverkleidungsteile 6 mit der zugehörigen Führungsnut 16.

Gemäß Fig. 3 weist die hinterschnittene Führungsnut 16 eine im Querschnitt kreisförmige Kammer 40 auf, die sich über einen Nutenschlitz 41 nach außen öffnet. Die Kammer 40 wird von einer Kammerwand 42 begrenzt, die im Bereich des Nutenschlitzes 41 in Schlitzwände 43 und 44 übergeht. Die Schlitzwände 43 und 44 verlaufen parallel zueinander in Längsrichtung der hinterschnittenen Nut 16 und haben voneinander einen Abstand der kleiner ist als der Durchmesser der Kammer 40, wodurch die Hinterschneidung entsteht. Außerdem ist Fig. 3 zu entnehmen, dass der Winkel unter dem die Wand 42 der Kammer 40 in die Schlitzwände 43 und 44 übergeht, größer ist als 90°.

An diese so gebildete hinterschnittene Führungsnut 16 sind die Führungsglieder 23 uns 24 mit dem Halsteil 25 angepasst.

Die Führungsnut 16 ist, wie Fig. 3 ferner erkennen lässt, Bestandteil einer Führungsschienenanordnung 45, die auch die Innenverkleidung 6 mit umfasst. Die Innenverkleidung 6 setzt sich aus zwei Innenverkleidungsteilen 46 und 47 zusammen, die im Bereich einen Spaltes 48 aneinander grenzen. Der Spalt 48 bildet bei der Ausführungsform gemäß Fig. 3 gleichzeitig den außen, d.h. zur Innenseite des Fahrzeugs hin gelegenen Teil des Nutzenschlitzes 41.

Jedes Seitenverkleidungsteil 46/47 weist eine Rückseite 49 bzw. 50 sowie eine Vorder- oder Sichtseite 51 bzw. 52 auf.

Die Innenverkleidungsteile 46 und 47 sind mit ihrer Rückseite 49 und 50 an der Rohkarosserie befestigt. Hierzu werden nicht weiter dargestellte Rastnasen oder Rastöffnungen bzw. Haken oder Hakenzapfen verwendet. In jedem Fall ist die Rückseite 49 bzw. 50 im Wesentlichen frei von großräumigen Hinterschneidungen, die komplizierte ausgedehnte bewegliche Schieber oder Kerne in der Spritzgussform erfordern würde.

Die Sichtseiten 51 und 52 sind entsprechend der übrigen Innenverkleidung gestaltet, beispielsweise mit einem filzartigen Material überzogen.

Bei der Herstellung können die beiden Innenverkleidungsteile 46 und 47 zunächst völlig getrennt sein. Im Laufe der Montage werden sie miteinander gefügt, beispielsweise unmittelbar im Anschluss an das obere dachseitige Ende des Spaltes 48, während sie im unteren Bereich des Spaltes 49 durch einen Steg oder eine Brücke aneinander befestigt sind, bevor sie in der Karosserie endgültig verankert sind. Diese Verbindung dient lediglich als Montageerleichterung, ist jedoch nicht zwingend erforderlich.

Der Innenverkleidungsteil 46 hat einen wesentlichen streifenförmige schmale Gestalt und liegt im fertigen Fahrzeug zwischen der Führungsnut 16 und der benachbarten Kante des Heckfensters. Der Innenverkleidungsteil 47 ist dagegen wesentlich flächiger, denn er führt den Bereich zwischen der Führungsnut 16 und dem angrenzenden Türausschnitt aus.

Wie gezeigt, gehören zu der Führungsschienenanordnung 45 nicht nur die beiden Innenverkleidungsteile 46 und 47, sondern auch eine profilierte Schiene 53, die sich an der Rückseite 49 bzw. 50 der beiden Innenverkleidungsteile 46 und 47 befindet und die den Spalt 48 überbrückt. In der Schiene 53 ist jener Teil der Führungnut 16 ausgebildet, der, gesehen von der Sichtseite 51 bzw. 52, hinter den beiden Innenverkleidungsteilen 46 und 47 liegt. Somit enthält die Schiene 53 die Kammer 40 zur Gänze und jenen Teil der beiden Schlitzwände 43 und 44, der bis zu der Rückseite 49 und 50 der Innenverkleidungsteile 46 und 47 reicht. Der Rest der Schlitzwände 43 und 44 ist gleichzeitig die Wand des Spaltes 48.

An die Schiene 53 sind seitliche Flanschleisten 54 und 55 angeformt, mit denen die Schiene 53, wie gezeigt, flach und satt auf den Rückseiten 49 und 50 aufliegt.

Um die Schiene 53 mit den beiden Innenverkleidungsteilen 46 und 47 zu verbinden, sind in den Flanschleisten im Abstand voneinander zylindrische Bohrungen eingeformt, durch die Zapfen 57 durchführen, die an der Rückseite 49 bzw. 50 ausgebildet sind. Die Zapfen 57 führen durch die Bohrung 56 hindurch und stehen an der Rückseite über. Auf dem überstehenden Teil sind scheibenförmige Krallenfedern aufgesetzt, die dazu eingerichtet sind, mit einer gewissen Vorspannung die Schiene 53 gegen die Rückseiten 49 und 50 angepresst zu halten.

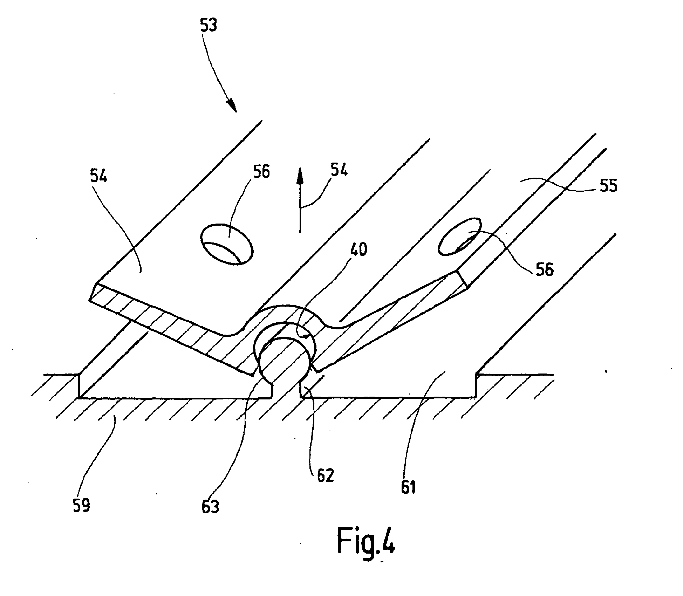

Da nicht nur die Kammer 40, sondern auch Teile der Schlitzwände 43 und 44 an der Schiene 53 ausgebildet sind, enthält diese eine der Länge der Führungsnut 16 entsprechende lange, hinterschnittene Nut. Gleichwohl besteht die Möglichkeit, eine solche Leiste 53 ohne ziehbaren Kern für die Kammer 50 in einer Spritzgussform herzustellen und auch zu entformen, wie dies Fig. 4 erkennen lässt.

Fig. 4 zeigt in stark schematischer Darstellung einen unteren Formnestteil 59 mit einer darin enthaltenen Nut 61. Etwa in der Mitte der Nut 61 ragt ein Steg 62 auf, der an seinem oberen freien Ende eine kreisförmige Verdickung oder Wulst 63 trägt. Beim Spritzen erzeugt der Steg 62 die in der Schiene 53 enthaltenen Teile des Schlitzes 41, während die Verdickung 63 die Kammer 40 entstehen lässt. Eine geeignete Dimensionierung der Weite des Nutenschlitzes 41 gegenüber dem Durchmesser der Kammer 40 und eine entsprechende Materialstärke der Schiene 53 an jener Stelle, die dem Nutenschlitz 41 gegenüber liegt, ermöglicht es die Schiene 53 von dem Formkern in Richtung eines Pfeiles 54 abzuziehen, wobei sich der Formkern, wie erwähnt, aus dem Steg 62 und der Verdickung 63 zusammensetzt. Beim Abziehen wird die Schiene 53 im Bereich des Schlitzes federelastisch aufgespreizt und kehrt nach dem Abziehen in ihre ursprüngliche gewünschte Form weitgehend wieder zurück.

Auf diese Weise können Führungsschienenanordnungen 45 hergestellt werden, die einen komplizierten dreidimensionalen Verlauf haben. Außerdem können so die Führungsschienenanordnungen mit der Innenverkleidung integriert werden, was getrennte Führungsschienen, wie sie beim Stand der Technik vorhanden sind, entbehrlich macht.

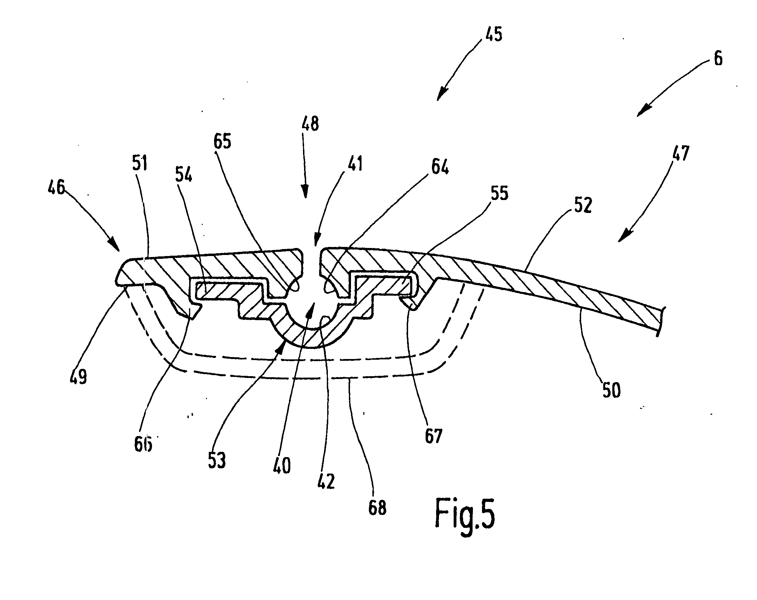

Falls die Materialbeschaffenheit und/oder die Dimensionierungen ein Entformen, ähnlich wie in Fig. 4 gezeigt, nicht ermöglichen, kann das Ausführungsbeispiel nach Fig. 5 verwendet werden. Bei diesem Ausführungsbeispiel werden für bereits beschriebene Strukturelemente, die funktionsgleich oder -ähnlich sind, dieselben Bezugszeichen wie in den vorhergehenden Figuren verwendet.

Die Schiene 53 enthält bei der Ausführungsform nach Fig. 5 lediglich einen halbzylindrischen Teil der Kammer 40, und zwar jenen Teil, der den Schlitz 41 unmittelbar gegenüberliegt. Dadurch ist die Schiene 43 völlig frei irgendwelchen Hinterschneidungen. Der in der Schiene 43 ausgebildete Teil der Kammer 40 hat lediglich die Gestalt einer halbkreisförmigen Rinne was die Spritzgussform wesentlich vereinfacht.

Der verbleibende Teil der Wand 42 der Kammer 40 ist zum Teil als Abschnitt 64 bzw. 65 im Bereich der Rückseite 49 oder 50 der beiden Innenverkleidungsteile 46 und 47 ausgebildet. Im montierten Zustand ergänzen die Wandabschnitte 64 und 65 zusammen mit der Rinne in der Leiste 43 sich zu der vollständigen Kammer 40 mit dem erwähnten Kreisquerschnitt.

Die Schlitzwände 43 und 45 sind ausschließlich an den beiden Innenverkleidungsteilen 46 und 47 ausgeprägt so dass der Nutenschlitz 41 gleichzeitig der Spalt 48 ist, an dem sich die beiden Innenverkleidungseile 46 und 47 gegenüberliegen.

Zur Befestigung der Leiste 53 sind gemäß Fig. 5 an der Rückseite 49 bzw. 50 ausgebildete Haken 66 und 67 vorgesehen, die die Flanschleisten 54 und 55 wie gezeigt übergreifen.

Außerdem ist in Fig. 5 schematisch eine Brücke 68 veranschaulicht, die im Bereich des unteren Endes des Spaltes 48 die beiden Innenverkleidungsteile 46 und 47 miteinander hinreichend fest verbindet, damit die Montage in der Karosserie vereinfacht ist.

Bei einem Fensterrollo für Kraftfahrzeuge ist eine Führungsschienenanordnung vorgesehen, die die Innenverkleidung mit umfasst. Die Innenverkleidung enthält einen Spalt, der gleichzeitig ein Nutenschlitz einer Führungsnut ist. Die Führungsnut ist hinterschnitten und umfasst den erwähnten Schlitz sowie eine Kammer, die hinter dem Innenverkleidungsteilen ausgebildet ist. Sie befindet sich je nach Ausführungsform zum Teil in einer Schiene oder vollständig innerhalb einer Schiene, die an der Rückseite der beiden Innenverkleidungsteile befestigt ist.

## Patentansprüche

1. Fensterrollo (14) für Kraftfahrzeuge,
mit einer drehbar gelagerten Wickelwelle (19),
mit einer Rollobahn (15), die mit einer Kante an der Wickelwelle (19) befestigt ist und die eine von der Wickelwelle (19) abliegende Kante (22) aufweist,
mit einem Spriegel (23,24), der mit der Rollobahn (15) an einer von der Wickelwelle (19) abliegenden Stelle verbunden ist, und
mit zwei Führungsschienenanordnung (45), die beidseits des Spriegels (23,24) angeordnet sind und in denen mit je einem Ende der Spriegel (23,24) geführt ist und **dadurch gekennzeichnet, dass** jede Führungsschienenanordnung aufweist:
ein ersten Innenverkleidungsteil (46,47) mit einer Sichtseite (51,52) und einer Rückseite (49,50), die im montierten Zustand einer Säule des Kraftfahrzeugs zugekehrt ist,
ein zweites Innenverkleidungsteil (46,47) mit einer Sichtseite (51,52) und einer Rückseite (49,50), die im montierten Zustand der betreffenden Säule des Kraftfahrzeugs zugekehrt ist, wobei die beiden Innenverkleidungsteile (46,47) unter Ausbildung eines Spalts (48) aneinander grenzen, und
mit einer Schiene (53), die an der Rückseite (49,50) der beiden Innenverkleidungsteile (46, 47) angebracht ist und sich längs des Spaltes (48) diesen überbrückend erstreckt,
wobei zumindest im montierten Zustand jede Führungsschienenanordnung (45) für den Spriegel (23,24) eine hinterschnittene Nut (16) bildet, die sich aus einer von einer Wand (42) begrenzten Kammer (40) und einem von zwei Schlitzwänden (43,44) begrenzten Schlitz (41) zusammensetzt, über den sich die Kammer (40) nach außen öffnet, die weiter ist als der Schlitz (41).

2. Fensterrollo nach Anspruch 1, **dadurch gekennzeichnet, dass** die Innenverkleidungsteile (46,47) zur Verkleidung der an die Heckscheibe (4) des Kraftfahrzeugs angrenzenden Säule eingerichtet sind.

3. Fensterrollo nach Anspruch 1, **dadurch gekennzeichnet, dass** die Schiene (53) eine hintergriffige Nut (16) enthält, die die Kammer (40) und zumindest einen Teil des Schlitzes (41) aufweist.

4. Fensterrollo nach Anspruch 1, **dadurch gekennzeichnet, dass** die Schiene (53) hinsichtlich der Relation zwischen der Schlitzweite und der Kammerweite derart gestaltet ist, dass sie nach dem Spritzen von einem Kern entformbar ist, der beim Entformen durch den Schlitz (41) aus der Kammer (40) freikommt.

5. Fensterrollo nach Anspruch 1, **dadurch gekennzeichnet, dass** die Schiene (53) auf ihrer dem Schlitz (41) gegenüber liegenden Seite derart gestaltet ist, dass sie nach dem Spritzen von einem Kern entformbar ist, der beim Entformen durch den Schlitz (41) aus der Kammer (40) freikommt.

6. Fensterrollo nach Anspruch 1, **dadurch gekennzeichnet, dass** die Wand (42) der Kammer (40) unter einem Winkel größer als 90°in die betreffende Schlitzwand (43,44) übergeht.

7. Fensterrollo nach Anspruch 1, **dadurch gekennzeichnet, dass** die Schiene (53) beidseits des Schlitzes (41) Befestigungsmittel (54,55,56) aufweist, mit denen die Schiene (53) an der Rückseite (49,50) der Innenverkleidungsteile (46,47) zu befestigen ist.

8. Fensterrollo nach Anspruch 1, **dadurch gekennzeichnet, dass** die Schiene (53) eine Nut enthält, die nicht hintergriffig ist.

9. Fensterrollo nach Anspruch 1, **dadurch gekennzeichnet, dass** die Schiene (53) lediglich einen Teil der Wand (42) bildet, die die Kammer (40) umgrenzt, und dass der restliche Teil der Wand (42) an den Innenverkleidungsteilen (46,47) unmittelbar ausgebildet ist.

10. Fensterrollo nach Anspruch 1, **dadurch gekennzeichnet, dass** die beiden Innenverkleidungsteile (46,47) miteinander verbunden sind, wobei die Verbindung gegebenenfalls einstückig ist.

11. Satz von Innenverkleidungsteilen (46,47) für Kraftfahrzeuge mit Fensterrollo (14), wobei die Innenverkleidungsteile (46,47) des Satzes eine Führungsschieneanordnung (45) mit einer hinterschnittenen Führungsnut (16) bilden und zu dem Satz gehören:
ein ersten Innenverkleidungsteil (46,47) mit einer Sichtseite (51,52) und einer Rückseite (49,40), die im montierten Zustand einer Säule des Kraftfahrzeugs zugekehrt ist,
ein zweites Innenverkleidungsteil (46,47) mit einer Sichtseite (51,52) und einer Rückseite (49,50), die im montierten Zustand der betreffenden Säule des Kraftfahrzeugs zugekehrt ist, wobei die beiden Innenverkleidungsteile (46,47) unter Ausbildung eines Spalts (48) aneinander grenzen, und
mit einer Schiene (53), die an der Rückseite (49,50) der beiden Innenverkleidungsteile (46,47) angebracht ist und sich längs des Spaltes (48) erstreckt,
wobei zumindest im montierten Zustand die Führungsschienenanordnung (45) für einen Spriegel (23,24) des Fensterrollos (14) eine hinterschnittene Nut (16) bildet, die sich aus einer von einer Wand (42) begrenzten Kammer (40) und einem von zwei Schlitzwänden (43,44) begrenzten Schlitz (41) zusammensetzt, über den sich die Kammer (40) nach außen öffnet, die weiter ist als der Schlitz (41).

12. Satz nach Anspruch 11, **dadurch gekennzeichnet,**
**dass** die Innenverkleidungsteile (46,47) zur Verkleidung der an die Heckscheibe (4) des Kraftfahrzeugs angrenzenden Säule eingerichtet sind.

13. Satz nach Anspruch 11, **dadurch gekennzeichnet,**
**dass** die Schiene (53) eine hintergriffige Nut (16) enthält, die die Kammer (40) und zumindest einen Teil des Schlitzes (41) aufweist.

14. Satz nach Anspruch 11, **dadurch gekennzeichnet,**
**dass** die Schiene (53) hinsichtlich der Relation zwischen der Schlitzweite und der Kammerweite derart gestaltet ist,
**dass** sie nach dem Spritzen von einem Kern entformbar ist, der beim Entformen durch den Schlitz (41) aus der Kammer (40) freikommt.

15. Satz nach Anspruch 11, **dadurch gekennzeichnet,**
**dass** die Schiene (53) auf ihrer dem Schlitz (41) gegenüber liegenden Seite derart gestaltet ist, dass sie nach dem Spritzen von einem Kern entformbar ist, der beim Entformen durch den Schlitz (41) aus der Kammer (40) freikommt.

16. Satz nach Anspruch 11, **dadurch gekennzeichnet, dass** die Wand (42) der Kammer (40) unter einem Winkel größer als 90°in die betreffende Schlitzwand (43,44) übergeht.

17. Satz nach Anspruch 11, **dadurch gekennzeichnet, dass** die Schiene (53) beidseits des Schlitzes (41) Befestigungsmittel (54,55) aufweist, mit denen die Schiene (53) an der Rückseite (49,50) der Innenverkleidungsteile (46,47) zu befestigen ist.

18. Satz nach Anspruch 11, **dadurch gekennzeichnet, dass** die Schiene (53) eine Nut enthält, die nicht hintergriffig ist.

19. Satz nach Anspruch 11, **dadurch gekennzeichnet, dass** die Schiene (53) lediglich einen Teil der Wand (42) bildet, die die Kammer (40) umgrenzt, und dass der restliche Teil der Wand (42) an den Innenverkleidungsteilen (46,47) ausgebildet ist.

20. Satz nach Anspruch 11, **dadurch gekennzeichnet, dass** die beiden Innenverkleidungsteile (46,47) miteinander verbunden sind, wobei die Verbindung gegebenenfalls einstückig ist.

## Claims

1. Window roller blind (14) for motor vehicles,
with a rotatably mounted winding shaft (19),
with a blind sheet (15), which is fastened to the winding shaft (19) at one edge and has an edge (22) remote from the winding shaft (19),
with a holding rib (23, 24), which is connected to the blind sheet (15) at a location remote from the winding shaft (19), and
with two guide rail arrangements (45), which are arranged on both sides of the holding rib (23, 24) and in which the holding rib (23, 24) is guided with a respective end and **characterised in that**
each guide rail arrangement has:
a first inside lining part (46, 47) with a visible side (51, 52) and a rear side (49, 50),
which in the mounted state is directed to face a column of the motor vehicle,
a second inside lining part (46, 47) with a visible side (51, 52) and a rear side (49, 50),
which in the mounted state is directed to face the respective column of the motor vehicle, wherein the two inside lining parts (46, 47) adjoin one another forming a gap (48), and
with a rail (53), which is attached to the rear side (49, 50) of the two inside lining parts (46, 47) and extends along the gap (48) to bridge this,
wherein at least in the mounted state each guide rail arrangement (45) forms an undercut groove (16) for the holding rib (23, 24) comprising a chamber (40) delimited by a wall (42) and a slot (41) delimited by two slot walls (43, 44), via which the chamber (40) opens outwards, which is wider than the slot (41).

2. Window roller blind according to claim 1, **characterised in that** the inside lining parts (46, 47) are arranged to line the column adjoining the rear window (4) of the motor vehicle.

3. Window roller blind according to claim 1, **characterised in that** the rail (53) contains an undercut groove (16), which has the chamber (40) and at least a part of the slot (41).

4. Window roller blind according to claim 1, **characterised in that** the rail (53) is configured with respect to the relation between the slot width and the chamber width in such a manner that after injection it can be demoulded from a core, which during demoulding comes free from the chamber (40) through the slot (41).

5. Window roller blind according to claim 1, **characterised in that** the rail (53) is configured on its side located opposite the slot (41) in such a manner that after injection it can be demoulded from a core, which during demoulding comes free from the chamber (40) through the slot (41).

6. Window roller blind according to claim 1, **characterised in that** the wall (42) of the chamber (40) merges into the respective slot wall (43, 44) at an angle larger than 90°.

7. Window roller blind according to claim 1, **characterised in that** on both sides of the slot (41) the rail (53) has fastening means (54, 55, 56), with which the rail (53) is to be fastened to the rear side (49, 50) of the inside lining parts (46, 47).

8. Window roller blind according to claim 1, **characterised in that** the rail (53) contains a groove, which is not undercut.

9. Window roller blind according to claim 1, **characterised in that** the rail (53) only forms a part of the wall (42), which borders the chamber (40), and that the remaining part of the wall (42) is configured directly on the inside lining parts (46, 47).

10. Window roller blind according to claim 1, **characterised in that** the two inside lining parts (46, 47) are connected to one another, wherein the connection is possibly in one piece.

11. Set of inside lining parts (46, 47) for motor vehicles with a window roller blind (14), wherein the inside lining parts (46, 47) of the set form a guide rail arrangement (45) with an undercut guide groove (16), and belonging to the set are:
a first inside lining part (46, 47) with a visible side (51, 52) and a rear side (49, 50),
which in the mounted state is directed to face a column of the motor vehicle,
a second inside lining part (46, 47) with a visible side (51, 52) and a rear side (49, 50),
which in the mounted state is directed to face the respective column of the motor vehicle, wherein the two inside lining parts (46, 47) adjoin one another forming a gap (48), and
with a rail (53), which is attached to the rear side (49, 50) of the two inside lining parts (46, 47) and extends along the gap (48),
wherein at least in the mounted state the guide rail arrangement (45) forms an undercut groove (16) for a holding rib (23, 24) of the window roller blind (14), said groove comprising a chamber (40) delimited by a wall (42) and a slot (41) delimited by two slot walls (43, 44), via which the chamber (40) opens outwards, which is wider than the slot (41).

12. Set according to claim 11, **characterised in that** the inside lining parts (46, 47) are arranged for lining the column adjoining the rear window (4) of the motor vehicle.

13. Set according to claim 11, **characterised in that** the rail (53) contains an undercut groove (16), which has the chamber (40) and at least a part of the slot (41).

14. Set according to claim 11, **characterised in that** the rail (53) is configured with respect to the relation between the slot width and the chamber width in such a manner that after injection it can be demoulded from a core, which during demoulding comes free from the chamber (40) through the slot (41).

15. Set according to claim 11, **characterised in that** the rail (53) is configured on its side located opposite the slot (41) in such a manner that after injection it can be demoulded from a core, which during demoulding comes free from the chamber (40) through the slot (41).

16. Set according to claim 11, **characterised in that** the wall (42) of the chamber (40) merges into the respective slot wall (43, 44) at an angle larger than 90°.

17. Set according to claim 11, **characterised in that** on both sides of the slot (41) the rail (53) has fastening means (54, 55), with which the rail (53) is to be fastened to the rear side (49, 50) of the inside lining parts (46, 47).

18. Set according to claim 11, **characterised in that** the rail (53) contains a groove, which is not undercut.

19. Set according to claim 11, **characterised in that** the rail (53) only forms a part of the wall (42), which borders the chamber (40), and that the remaining part of the wall (42) is configured directly on the inside lining parts (46, 47).

20. Set according to claim 11, **characterised in that** the two inside lining parts (46, 47) are connected to one another, wherein the connection is possibly in one piece.

## Revendications

1. Store à enrouleur (14) pour véhicules automobiles,
comprenant un arbre d'enroulement (19) monté tournant,
comprenant une bande de store (15) qui est fixée par un bord à l'arbre d'enroulement (19) et qui présente un bord (22) éloigné de l'arbre d'enroulement (19),
comprenant un arceau (23, 24) qui est relié à la bande de store (15), à un endroit éloigné de l'arbre d'enroulement (19), et
comprenant deux agencements de rail de guidage (45) qui sont disposés de part et d'autre de l'arceau (23, 24) et dans lesquels l'arceau (23, 24) est guidé respectivement avec une extrémité, et
**caractérisé par le fait que** chaque agencement de rail de guidage présente :
un premier élément d'habillage intérieur (46, 47) doté d'une face visible (51, 52) et d'une face arrière (49, 50) qui, à l'état assemblé, est tournée vers un montant du véhicule,
un deuxième élément d'habillage intérieur (46, 47) doté d'une face visible (51, 52) et d'une face arrière (49, 50) qui, à l'état assemblé, est tournée vers le montant respectif du véhicule, les deux éléments d'habillage intérieur (46, 47) se jouxtant en formant un interstice (48), et
comprenant un rail (53) qui est fixé à la face arrière (49, 50) des deux éléments d'habillage intérieur (46, 47) et s'étend le long de l'interstice (48), en recouvrant celui-ci,
chaque agencement de rail de guidage (45) formant, au moins à l'état assemblé, une rainure (16) en contredépouille pour l'arceau (23, 24), rainure qui se compose d'une cavité (40), délimitée par une paroi (42), et d'une fente (41) qui est délimitée par deux parois de fente (43, 44) et par laquelle s'ouvre vers l'extérieur la cavité (40) qui est plus large que la fente (41).

2. Store à enrouleur selon la revendication 1, **caractérisé par le fait que** les éléments d'habillage intérieur (46, 47) sont conçus pour habiller le montant qui est contigu à la lunette arrière (4) du véhicule.

3. Store selon la revendication 1, **caractérisé par le fait que** le rail (53) comporte une rainure (16) en contredépouille qui présente la cavité (40) et au moins une partie de la fente (41).

4. Store selon la revendication 1, **caractérisé par le fait que**, en ce qui concerne la relation entre la largeur de fente et la largeur de cavité, le rail (53) est conformé de manière telle qu'après l'injection il puisse être séparé d'un noyau qui, lors du démoulage, se dégage de la cavité (40) en passant par la fente (41).

5. Store selon la revendication 1, **caractérisé par le fait que** sur son côté situé en vis-à-vis de la fente (41), le rail (53) est conformé de manière telle qu'après l'injection il puisse être séparé d'un noyau qui, lors du démoulage, se dégage de la cavité (40) en passant par la fente (41).

6. Store selon la revendication 1, **caractérisé par le fait que** la paroi (42) de la cavité (40) se raccorde à la paroi de fente (43, 44) concernée, sous un angle supérieur à 90°.

7. Store selon la revendication 1, **caractérisé par le fait que** le rail (53) comporte, de part et d'autre de la fente (41), des moyens de fixation (54, 55, 56) par lesquels le rail (53) peut être fixé à la face arrière (49, 50) des éléments d'habillage intérieur (46, 47).

8. Store selon la revendication 1, **caractérisé par le fait que** le rail (53) comporte une rainure qui n'est pas en contredépouille.

9. Store selon la revendication 1, **caractérisé par le fait que** le rail (53) forme seulement une partie de la paroi (42) qui délimite la cavité (40), et **par le fait que** la partie restante de la paroi (42) est façonnée directement sur les éléments d'habillage intérieur (46, 47).

10. Store selon la revendication 1, **caractérisé par le fait que** les deux éléments d'habillage intérieur (46, 47) sont reliés entre eux, la liaison étant réalisée le cas échéant d'une seule pièce.

11. Ensemble d'éléments d'habillage intérieur (46, 47) destiné à des véhicules automobiles dotés d'un store à enrouleur (14), les éléments d'habillage intérieur (46, 47) de l'ensemble formant un agencement de rail de guidage (45) avec une rainure de guidage (16) en contredépouille, et l'ensemble comprenant :
un premier élément d'habillage intérieur (46, 47) doté d'une face visible (51, 52) et d'une face arrière (49, 50) qui, à l'état assemblé, est tournée vers un montant du véhicule,
un deuxième élément d'habillage intérieur (46, 47) doté d'une face visible (51, 52) et d'une face arrière (49, 50) qui, à l'état assemblé, est tournée vers le montant respectif du véhicule, les deux éléments d'habillage intérieur (46, 47) se jouxtant en formant un interstice (48), et
comprenant un rail (53) qui est monté sur la face arrière (49, 50) des deux éléments d'habillage intérieur (46, 47) et s'étend le long de l'interstice (48),
l'agencement de rail de guidage (45) formant, au moins à l'état assemblé, une rainure (16) en contredépouille pour un arceau (23, 24) du store à enrouleur (14), rainure qui se compose d'une cavité (40), délimitée par une paroi (42), et d'une fente (41) qui est délimitée par deux parois de fente (43, 44) et par laquelle s'ouvre vers l'extérieur la cavité (40) qui est plus large que la fente (41).

12. Ensemble selon la revendication 11, **caractérisé par le fait que** les éléments d'habillage intérieur (46, 47) sont conçus pour habiller le montant contigu à la lunette arrière (4) du véhicule.

13. Ensemble selon la revendication 11, **caractérisé par le fait que** le rail (53) comporte une rainure (16) en contredépouille qui présente la cavité (40) et au moins une partie de la fente (41).

14. Ensemble selon la revendication 11, **caractérisé par le fait que**, en ce qui concerne la relation entre la largeur de fente et la largeur de cavité, le rail (53) est conformé de manière telle qu'après l'injection il puisse être séparé d'un noyau qui, lors du démoulage, se dégage de la cavité (40) en passant par la fente (41).

15. Ensemble selon la revendication 11, **caractérisé par le fait que** sur son côté situé en vis-à-vis de la fente (41), le rail (53) est conformé de manière telle qu'après l'injection il puisse être séparé d'un noyau qui, lors du démoulage, se dégage de la cavité (40) en passant par la fente (41).

16. Ensemble selon la revendication 11, **caractérisé par le fait que** la paroi (42) de la cavité (40) se raccorde à la paroi de fente (43, 44) concernée, sous un angle supérieur à 90°.

17. Ensemble selon la revendication 11, **caractérisé par le fait que** le rail (53) comporte, de part et d'autre de la fente (41), des moyens de fixation (54, 55) par lesquels le rail (53) peut être fixé à la face arrière (49, 50) des éléments d'habillage intérieur (46, 47).

18. Ensemble selon la revendication 11, **caractérisé par le fait que** le rail (53) comporte une rainure qui n'est pas en contredépouille.

19. Ensemble selon la revendication 11, **caractérisé par le fait que** le rail (53) forme seulement une partie de la paroi (42) qui délimite la cavité (40), et **par le fait que** la partie restante de la paroi (42) est façonnée directement sur les éléments d'habillage intérieur (46, 47).

20. Ensemble selon la revendication 11, **caractérisé par le fait que** les deux éléments d'habillage intérieur (46, 47) sont reliés entre eux, la liaison étant réalisée le cas échéant d'une seule pièce.
